# EUROPEAN PATENT SPECIFICATION

(11) **EP 1 543 793 B1**
(45) Date of publication and mention of the grant of the patent: **01.07.2009**
(21) Application number: 04257800.5
(22) Date of filing: 15.12.2004
(51) Int. Cl.: A61C 3/08

(54) **Instrument for distributing restorative material on a tooth surface**
Instrument zum Verteilen eines Restaurationsmaterials auf eine Zahnoberfläche
Instrument pour répartir un matériau de restauration sur la surface d'une dent

(30) Priority: 15.12.2003 US 736262
(43) Date of publication of application: 22.06.2005
(73) Proprietor: KerrHawe S.A., 6934 Bioggio (CH)
(72) Inventor: Kilcher, Beat, 6935 Bosco Luganese (CH); Besek, Mario, 8800 Thalwil (CH); Da Rold, Marco, 6951 Odogno (CH)
(74) Representative: Findlay, Alice Rosemary

(56) References cited:
- US-A- 6 071 122
- US-A1- 2003 186 195

## Description

This invention relates to a dental instrument for homogeneously applying and shaping tooth restorative material, and specifically, a dental instrument with interchangeable roller tips for distributing the restorative material.

Document US 2003/0186195 A1 discloses a dental instrument according to the preamble of appended claim 1.

Composite materials, i.e., tooth restorative materials containing binders in the form of hardenable, generally organic substances, have become the standard filling materials in dentistry. A disadvantage of these composite materials, however, is their tendency to adhere more or less to the instrument that is used to apply or shape them. As a result, and by way of example, the composite material has a tendency to be drawn off from the edges of the cavity, to be distributed inhomogeneously on the tooth surface, and to form air bubbles during the distribution. The instruments used for distributing the restorative material typically comprise a steel instrument with an uncoated working tip portion or a tip portion coated with TiNi, for example, or a plastic material with or without a coated or treated working tip portion. As a further example, the adhesion of the composite material to the instrument has been adjusted by coating the working ends of the instrument with Teflon□, but these instruments have limited shapes and are not always satisfactory in practice. Another solution is proposed in U.S. Patent No. 6,071,122, wherein the working tip of the plastic instrument has a discontinuous surface that includes an array of micropits. While that instrument achieves reduced adhesion of the composite material, homogeneous distribution free of air bubbles has not yet been fully achieved. There is thus a need to develop a dental instrument that is effective in distributing homogeneously a composite restorative material to a tooth surface, and which avoids the integration of air bubbles in the restorative.

The present invention in a preferred embodiment provides a dental instrument with interchangeable roller tips for distributing restorative materials on a tooth surface, which roller tips distribute the restorative material quickly, precisely and homogeneously with little adherence of the restorative material to the roller tip due, in part, to the short contact time between the roller tip and the composite material. To this end, a dental instrument is provided having an elongate body with a handle portion and a working end extending therefrom. A roller tip is rotatably mounted on the working end so as to rotate about a center axis of the end of the instrument, and is sized to distribute the restorative material on a tooth surface, including a cavity surface. The roller tip is removable from the working end, such that differently shaped tips may be placed on the working end during the restoration of the tooth, as necessary, to ensure complete and even coverage to an uneven surface. In an exemplary embodiment, a bushing or rolling element bearing is rotatably mounted on the working end between the working end and the roller tip, such that the roller tip is rotatable on the working end by means of the rotatable bushing or bearing. In another exemplary embodiment, the dental instrument includes two working ends extending in opposing directions from the handle portion to provide different angles for the working ends or to provide differently shaped roller tips on the working ends.

The invention will now be described by way of example with reference to the accompanying drawings in which:

FIG. 1 is a perspective view of a dental instrument of the present invention;

FIG. 2 is a cross-sectional view of a first working end of the instrument of FIG. 1, as taken along line 2-2;

FIG. 2A is a cross-sectional view of an alternative embodiment of the first working end of the instrument of FIG. 1, also taken along line 2-2;

FIG. 3 depicts a side elevational view of an alternative embodiment of a dental instrument of the present invention with the working end in partial cross-section;

FIGS. 4A-4C depict various embodiments for the roller tips of the instrument of the present invention; and

FIGS. 5A-5B depict uses of an instrument of the present invention in applying and shaping restorative materials on tooth surfaces.

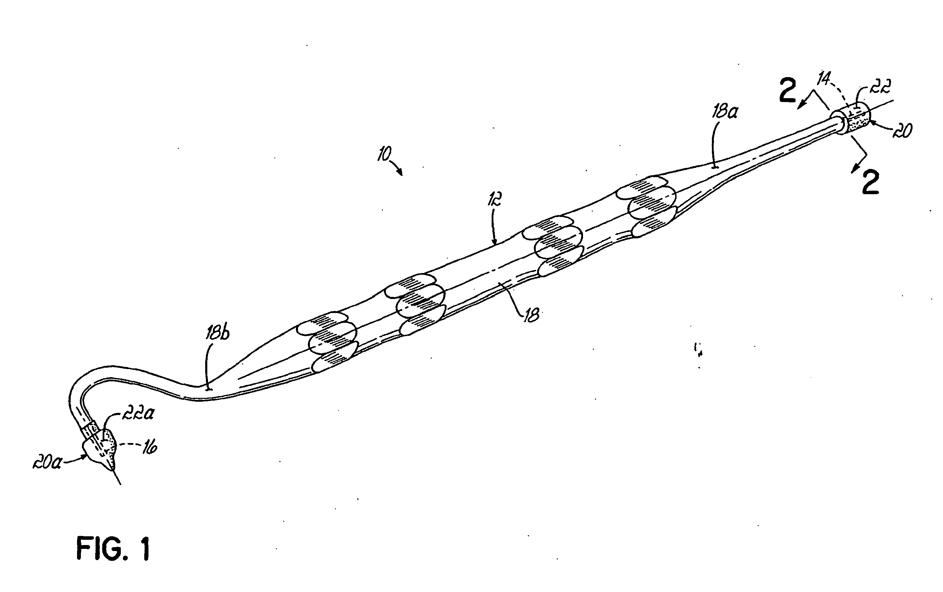

Reference will be made to FIGS. 1-5B in which like reference numerals are used to refer to like parts. An exemplary dental instrument 10 is depicted in perspective view in FIG. 1. Instrument 10, at least in the depicted preferred form, is designed for distributing tooth restorative materials on a tooth surface within the oral cavity of a patient, i.e. within the patient's mouth, without the adherence problems of the prior art. Instrument 10 is also designed for distributing tooth restorative materials on an artificial tooth surface to form a prosthetic tooth. Instrument 10 has an elongate body 12 with a first working end 14 and a second working end 16 that extend from opposite ends 18a, 18b of a handle portion 18. As shown in FIG. 1, the first working end 14 extends from end 18a of the handle portion 18 such that its center axis is substantially coaxial with the center axis of the handle portion 18. This construction may be referred to as an axial working end. As further shown in FIG. 1, the second working end 16 extends from end 18b of the handle portion 18 in a direction such that its center axis is perpendicular (90°) to the center axis of the handle portion 18. This construction may be referred to as a right angle working end. Depending on the tooth to be restored, differently angled working ends allow the dentist to choose the appropriate angle for most effectively distributing the restorative material on the tooth surface, particularly where the tooth surface is located in the oral cavity. While the second working end 16 is shown at a 90° angle from the center axis of the handle portion 18, it may be appreciated that angles in the range of 5-90° may be useful and angles in the range of 45-90° may be even more useful. In addition, both working ends 14, 16 may be coaxial with the center axis of the handle portion 18 or both ends 14, 16 may be angled relative to the center axis of the handle portion 18. Thus, the particular angles for the first and second working ends 14, 16 depicted in FIG. 1 are not intended to limit the configuration of the instrument 10 of the present invention.

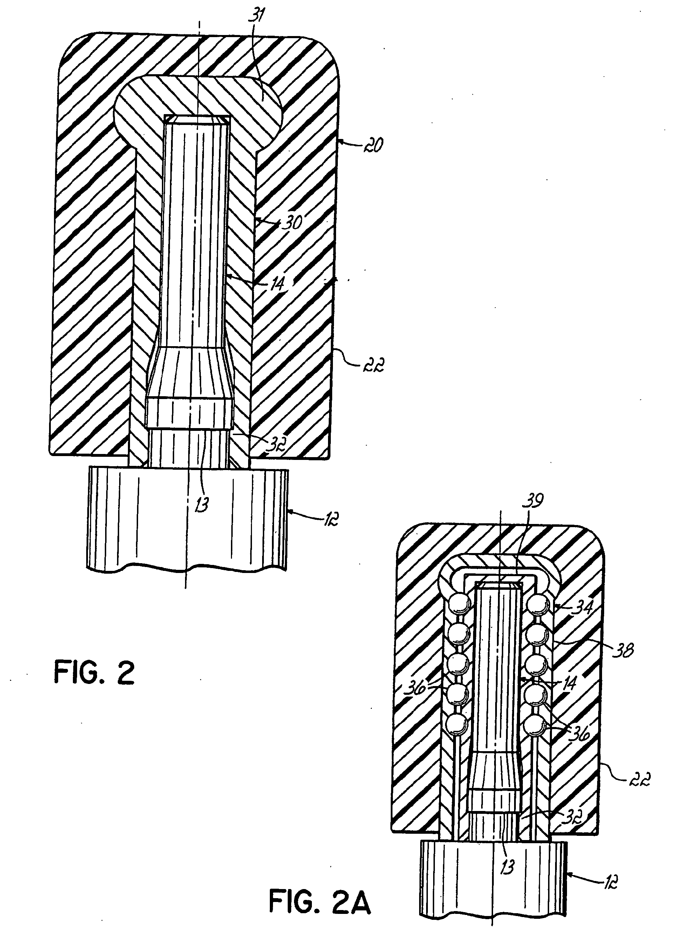

Each of the first and second working ends 14, 16 are depicted with a roller tip 20, 20a, respectively, sized to distribute restorative material on a tooth surface, wherein tips 20, 20a are removable from the first and second working ends 14, 16 and interchangeable with each other or with other roller tips 20. An exemplary embodiment of the roller tip 20 is more clearly depicted in cross-sectional view in FIG. 2, as taken along line 2-2 of FIG. 1. The first working end 14 is shown having a reduced diameter as compared to the diameter of the remaining portion of the elongate body 12, including handle portion 18, but the invention is not so limited. In this embodiment, mounted on the first working end 14 is a bushing 30, which is rotatable on the first working end 14 about the center axis of the first working end 14. The roller tip 20 is mounted on, and rotatable with, the bushing 30 so as to be rotatable about the first working end 14 by means of the rotation of the rotatable bushing 30, which rotates relative to working end 14. Because the center of the roller tip 20 is coaxial with the center of the working end 14 of the instrument 10 in this exemplary embodiment, torque is avoided during rotation of the roller tip 20 to distribute the restorative material. While the roller tip 20 is depicted as a closed cylinder at distal end 15, it may be appreciated that the roller tip 20 may be an open cylinder at distal end 15 thereby exposing the bushing 30. However, the exemplary embodiment shown in FIG. 2 is advantageous in that it prevents restorative material from entering into the bushing area and interfering with operation of the rotatable tip 20 and bushing 30. Roller tip 20 is further shown having a substantially uniformly cylindrical surface 22 for distributing restorative material on a tooth surface. It may be appreciated, however, as will be discussed in more detail below, that roller tip 20 may be shaped to have a non-uniform outer surface 22.

In an exemplary embodiment, bushing 30 includes a clip portion 32 for engaging a ridge portion 13 of first working end 14. Clip portion 32 prevents restorative material from getting between the bushing 30 and the first working end 14. Clip portion 32 further assists in the retention and easy removal of the roller tip 20 such that the roller tip 20 is interchangeable with other roller tips. A bulbous shape for top portion 31 of bushing 30 is also advantageous in that it also assists in the interchangeability of roller tip 20 without the risk of axial disassembling. A similar construction for bushing 30 may be used at second working end 16.

Advantageously, the elongate body 12, including first and second working ends 14, 16 and/or bushing 30, comprise a plastic material containing a friction-reducing additive to facilitate rotation of the bushings 30 around the first and second working ends 14, 16. Friction is the force that retards, that is partially brakes, the movement of two surfaces against each other, and the kinetic coefficient of friction, µ, is a measurement of the extent of friction present during rotation. The kinetic coefficient of friction is measured by dividing the frictional resistance force, f, by the normal force, N, that presses the two surfaces together when they move relative to each other. Advantageously, the amount of friction-reducing material in one or both of the elongate body 12 and bushings 30 is sufficient to provide a kinetic coefficient of friction of less than 0.2 between the first working end 14 and the bushing 30 on which the roller tip 20 is mounted, and between the second working end 16 and the bushing 30 on which roller tip 20a is mounted.

In an exemplary embodiment, the elongate body 12 comprises a plastic material containing 2-30 wt.% of a friction-reducing additive. In another exemplary embodiment, the bushings 30 comprise a plastic material containing 2-30 wt.% of a friction-reducing additive. In yet another exemplary embodiment, each of the elongate body 12 and the bushings 30 comprise a plastic material containing 2-30 wt.% of a friction-reducing additive. In each of these exemplary embodiments, the friction-reducing additive is advantageously polytetrafluoroethylene present in an amount of 2 20 wt.%, and more advantageously, the polytetrafluoroethylene is present in an amount of 5-15 wt.%. In addition to or in place of polytetrafluoroethylene as a friction-reducing additive, and by way of example only, fluorinated ethylene propylene, perfluoroalkoxy copolymers, carbon fibers and molybdenum disulfide may be also be effective to provide a low coefficient of friction. Similar to the polytetrafluoroethylene additive, the fluorinated ethylene propylene and perfluoroalkoxy copolymers are advantageously present in an amount of 2-20 wt.% of the plastic material, while carbon fibers are advantageously present in an amount of 5-30 wt.% of the plastic material and molybdenum disulfide is advantageously present in an amount of 3-6 wt.% of the plastic material. It may be understood, however, that other now known or hereafter developed friction-reducing materials may be used as an additive in accordance with the present invention in an appropriate and/or similar amount to achieve a low-frictional resistance between the rotating components.

The plastic material for the elongate body 12 is advantageously one or a combination of polyetherimide, polybutylene terephthalate, polyphenylsulfone, polyethersulfone, polyphthalamid (PA6T/6I), and polyetheretherketone. To increase the stiffness of the elongate body 12, the plastic material may be reinforced with glass fibers or carbon fibers. The friction-reducing additive may be compounded within the plastic matrix to form a plastic material charged with the friction-reducing additive to reduce the friction with the rotating bushing 30. Alternatively, the first and second working ends 14, 16 of the elongate body 12 may be coated with the friction-reducing additive. Thus, the plastic material containing the friction-reducing additive encompasses both a plastic matrix with a friction-reducing additive dispersed therein or a plastic body with the surface thereof coated with a friction-reducing additive.

The plastic material for the bushing is advantageously an acetyl resin, but the invention is not so limited. Advantageously, the friction-reducing additive is compounded within the plastic matrix to provide the low friction resistance. While coating an inside surface of the bushing 30 with the friction-reducing additive is not precluded from the present invention, it may be appreciated that the small size of the bushings 30 limit the practicality of this approach.

The roller tips 20, 20a advantageously comprise a resilient material that has the ability to return to its original shape after a mechanical compression, with no plastic deformation occurring when subjected to mechanical stress under normal circumstances. Roller tips 20, 20a also advantageously comprise a material having low surface energy, for example, less than 25 mN/m, which also contributes to low adhesion with the restorative composite materials. Examples of such resilient materials include silicones, polyurethanes, and thermoplastic elastomers. Advantageously, roller tips 20, 20a comprise a fluorine-charged thermoplastic vulcanizate, such as the Viton® fluoroelastomers from DuPont Dow Elastomers, Wilmington, DE and Fluoroprene® from Freudenberg-NOK, Plymouth, MI, which each contain 40-70 wt.% fluorine. These fluorine charged materials have low surface tension, on the order of 18-20 mN/m, and thus, have low adhesion to the restorative composite materials. In an exemplary embodiment, the roller tip material has a Shore A hardness of 20-60, and more advantageously, the roller tip has a Shore A hardness on the order of 30. The roller tip material may be a solid material or a microporous material. Because the roller tips 20, 20a are interchangeable on the working ends 14, 16 of instrument 10, various roller tips 20 may be provided having different hardnesses, different shapes and different colors, as desired.

The bushings 30 may be pre-mounted inside the roller tips 20, 20a to provide units that are then mounted on the working ends 14 and 16 of the elongate body 12 to form the instrument 10, and the units are interchangeable. Alternatively, the bushings 30 may be pre-mounted on the working ends 14 and 16, and the roller tips 20, 20a are interchangeably mounted on the pre-mounted bushings 30. In either embodiment, the roller tips 20, 20a may be pre-molded and flexible enough to be mounted on the bushings 30 without difficulty. Alternatively, when the roller tips 20, 20a and bushings 30 are pre-mounted to form units, the roller tips 20, 20a may be over-molded onto the bushings 30, such as where the material of the roller tips is not flexible enough to be easily mounted on the bushings 30. Advantageously, as depicted in FIG. 2, the roller tip 20 is shorter than the bushing 30 to provide clearance between roller tip 20 and elongate body 12 to avoid friction between the two.

FIG. 2 depicts in cross-sectional view an alternative embodiment of the instrument of the present invention in which a rolling element bearing 34 is mounted on working end 14 instead of bushing 30. Rolling element bearing 34 includes rolling elements 36, such as ball bearings, cylindrical rollers or taper rollers, positioned and rotatable between an outer ring 38 and an inner ring 39. The rolling element bearing 34 may also be used on working end 16 in place of bushing 30. The description above regarding the materials, construction, and mounting of bushing 30 apply equally to rolling element bearing 34.

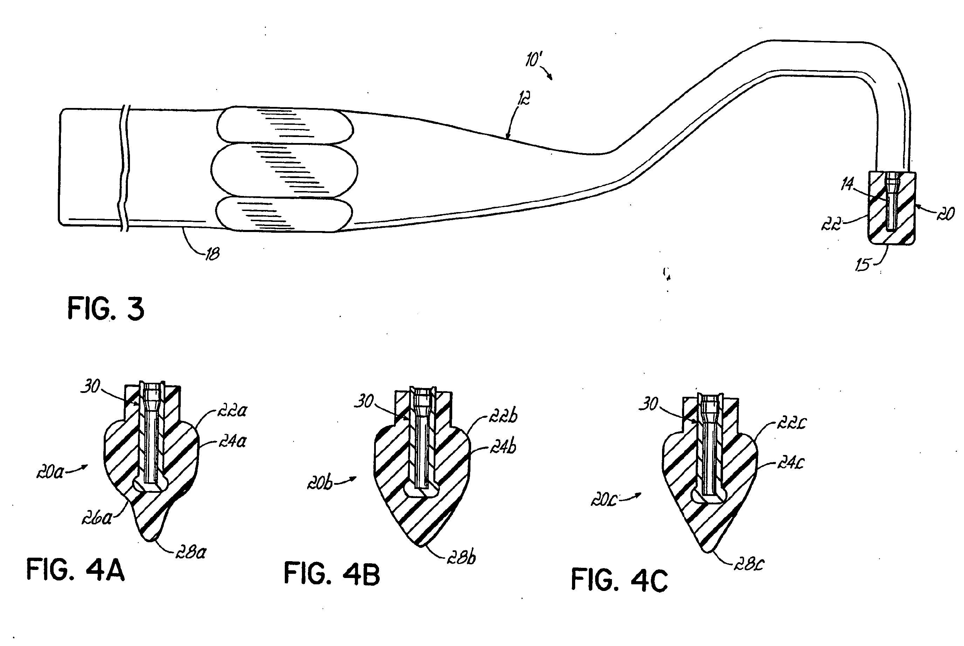

FIG. 3 depicts in partial cross-section another exemplary embodiment of a dental instrument 10' of the present invention having an elongate body 12 with a handle portion 18 and a single working end 14 extending therefrom. Thus, dental instruments in accordance with the present invention may have one or two working ends. In FIG. 3, there is also depicted an embodiment in which the bushing 30 (or rolling element bearing 34) is eliminated, such that the roller tip 20 is directly rotatable about the working end 14. To achieve low friction resistance between the roller tip 20 and the working end 14 of the elongate body 12, the elongate body 12 comprises a plastic material containing a friction-reducing additive, as discussed above in reference to instrument 10. If additional friction reduction is desired, the roller tip 20 can be gas-phase fluorinated. Thus, in this embodiment, rather than the roller tip 20 rotating via rotation of a bushing 30 (or rolling element bearing 34), the roller tip 20 itself rotates directly relative to the working end 14. Thus, an instrument of the present invention may be provided with one or two working ends 14 and/or 16, and may be provided with or without bushings 30 (or rolling element bearings 34). While the greatest friction reduction may occur with a plastic elongate body 12 charged with a friction-reducing additive upon which is mounted a bushing(s) or bearing(s) charged with a friction-reducing additive, it may be understood that the materials of these components may be altered and/or the bushing(s)/bearing(s) eliminated as long as the kinetic coefficient of friction is less than 0.2 between the working ends 14, 16 and the rotating component (roller tip 20, bushing 30, or rolling element bearing 34).

FIGS. 4A-4C depict various shapes for the roller tips 20. While the roller tip 20 on first working end 14 of FIGS. 1-3 was depicted as being substantially uniformly cylindrical along its outer surface 22, FIG. 4A depicts a drop-shaped or pear-shaped roller tip 20a, also shown on second working end 16 in FIG. 1, where the outer surface 22a has a maximum circumference 24a adjacent the handle portion 18, and then sharply tapers inward to an intermediate circumference 26a from which it then tapers less drastically to a distal tip 28a furthest from the handle portion 18, thereby forming a very small circumference distal tip 28a that is adapted to fit within small cavities in a tooth surface (not shown). The drop-shaped roller tip 20a in FIG. 4A provides the benefit of the large maximum circumference surface 24a for applying and shaping the composite material generally to the tooth surface, while the small distal tip portion 28a ensures homogeneous distribution into small irregularities in the tooth surface not reachable by the larger rolling surface 24a. FIG. 4B depicts a tapered roller tip 20b with a relatively small uniform taper angle such that the outer surface 22b has a maximum circumference 24b adjacent the handle portion 18 and then slightly tapers inward to a minimum circumference 28b furthest from the handle portion 18 to provide a larger distal tip portion 28b that is adapted to engage larger irregularities in the tooth surface. FIG. 4C is similar to FIG. 4B but depicting a larger uniform taper angle from the maximum circumference 24c such that the distal tip 28c is smaller in diameter. All statements made herein regarding roller tip 20 are equally applicable to roller tips 20a, 20b and 20c, for example, statements regarding the material of construction or method of mounting.

The dentist may interchange these roller tips 20, 20a, 20b, 20c, as desired, to provide the working ends 14, 16 with shapes most suitable for the particular tooth surface being restored. For example, instrument 10 of FIG. 1 may be provided with additional roller tips 20b, 20c that are removably mountable on working ends 14, 16 upon removal of roller tips 20, 20a such that all roller tips 20, 20a, 20b, 20c are fully interchangeable. The additional roller tips 20b, 20c may be pre-mounted on bushings 30 or bearings (not shown) for embodiments in which the roller tips 20, 20a are substantially permanently mounted on bushings 30 (or roller element bearings 34), and the bushings 30 (bearings 34) are removably mounted on the working ends 14, 16. Alternatively, additional roller tips 20b, 20c may be removably mountable directly on the working ends 14, 16 for those embodiments where no bushings or bearings are used, or removably mountable on bushings 30 (or roller element bearings 34) that are pre-mounted on the working ends 14, 16. It may be appreciated that other roller tip shapes may be utilized for the instrument 10 (or 10') of the present invention other than those depicted in FIGS. 1-4B.

As a result of the interchangeable roller tips 20, 20a, 20b, 20c, the dental instrument of the present invention is particularly suitable for use with both anterior and posterior teeth. By way of example, a substantially uniformly cylindrical-shaped roller tip 20 depicted in FIGS. 1-3 may be ideal for distributing restorative material on the front surface of an anterior tooth, while the drop-shaped and pear-shaped roller tips 20a, 20b, 20c depicted in FIGS. 4A 4C may be particularly suitable for anterior proximal surfaces and for the surfaces of proximal teeth, in particular on the marginal area and the cavity walls of a posterior tooth.

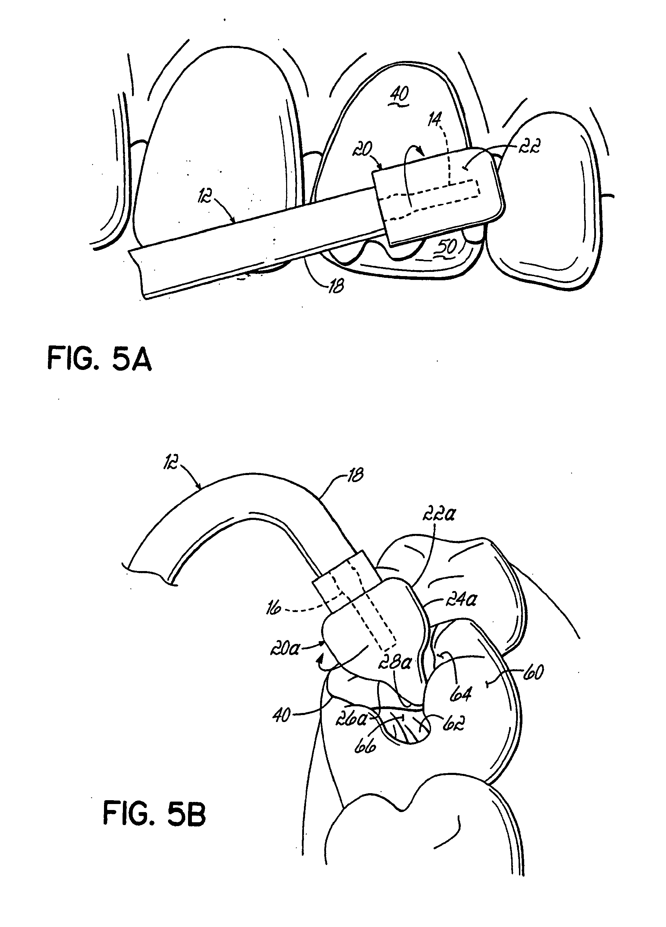

FIGS. 5A and 5B depict the benefit of the instrument 10 (or 10') of the present invention in distributing restorative material onto a tooth surface in the oral cavity. In FIG. 5A, a roller tip 20 with a substantially uniformly cylindrical outer surface 22 is mounted on an axial working end 14, i.e., the working end 14 has a center axis coaxial with the center axis of the handle portion 18, as shown in FIG 1. A restorative material 40 is distributed on a front tooth surface 50 by manipulating the instrument 10 to roll the roller tip 20 across the tooth surface 50, back and forth as necessary, to provide a homogeneous and relatively flat layer of restorative material that is free of bubbles. The homogeneity and bubble-free nature are due to the quick distribution achievable by means of the rotating roller tip 20 whereby adherence of the restorative material 40 to the surface 22 of the roller tip 20 is reduced or avoided. "Distribution" as referred to herein may include the initial application of the restorative material 40 to the tooth surface 50, as well as the spreading, shaping, adapting and/or smoothing of the material 40 into a uniform layer. Alternatively, the restorative material 40 may be first introduced onto the tooth surface 50 by other means, and distribution with the instrument 10 (or 10') of the present invention may include the spreading, shaping, adapting and/or smoothing of the material 40 into a uniform layer. Thus, the terms "distributing" and "distribution" are intended to be broad in scope, referring to any application and/or manipulation of the restorative material relative to the tooth surface. Likewise, "tooth surface" broadly refers to any external surface of the tooth or any internal surface, such as the walls of a tooth cavity. By virtue of the roller tips 20 (20a, 20b, 20c), instrument 10 (or 10') of the present invention is also particularly useful in creating a defined layer thickness of restorative material on a tooth surface.

FIG. 5B depicts use of an instrument 10 (or 10') of the present invention for distributing restorative material 40 on a posterior tooth surface 60, both on the marginal area and on the cavity walls. The drop-shaped roller tip 20a depicted in FIG. 4A is mounted on a right angle working end 16 of the elongate body 12, i.e., the center axis of the working end 16 is angled 90° relative to the center axis of the handle portion 18, as shown in FIG 1. The distal tip 28a of the roller tip 20a is capable of distributing the restorative material 40 into the cavity 62 and forming a uniform or homogeneous layer on the cavity walls, and the outer surface 22a including the maximum circumference 24a to the intermediate circumference 26a is effective to distribute the restorative material 40 on the marginal area. The restorative material 40 does not stick to the instrument 10 because it does not have time to adhere completely to the tip surface 22a due to the quick and efficient distribution achieved by the roller tip 20a. The quick and efficient distribution also avoids the integration of air bubbles during the distribution process.

The easy interchangeability of the roller tips 20, 20a, 20b, 20c, as well as a double-ended instrument 10 having differently shaped tips 20 and 20a (20b or 20c) provides the dentist with flexibility during the distribution process. The control of friction between the roller tips 20 (20a, 20b, 20c) and the elongate body 12, or between the bushings 30 and the body 12, enable the quick, smooth and efficient distribution. There is thus provided a dental instrument for distributing restorative material on a tooth surface that is far superior to the dental instruments of the prior art. Also, as stated previously, while the dental instrument 10 (or 10') is particularly useful for distributing restorative material on a tooth surface that resides in the oral cavity, the invention is not so limited. Dental instrument 10 (or 10') may also be used to shape a prosthetic tooth. Thus, the roller tips 20 (20a, 20b, 20c) are sized for use with a tooth surface, including those of natural and artificial teeth residing in the oral cavity as well as artificial prosthetic teeth intended to later reside in the oral cavity.

While the present invention has been illustrated by the description of one or more embodiments thereof, and while the embodiments have been described in considerable detail, additional advantages and modifications will readily appear to those skilled in the art. For example, while the dental instrument of the present invention at least in the preferred embodiments addresses shortcomings experienced in the distribution of composite-type restorative materials, the instrument may well find applicability with other dental materials.

## Claims

1. A dental instrument (10) for distributing a restorative material on a tooth surface, the instrument comprising:
an elongate body (12) comprising a handle portion (18) and a fisrt working end (14) extending therefrom; and
a first roller tip (20) sized to distribute a restorative material on a tooth surface,
**characterised in that** said first roller tip is rotatably mounted on the first working (14) end and rotatable about a center axis of the first working end

2. The dental instrument of claim 1 further comprising:
a second working end (16) extending from the handle portion (18), wherein the handle portion is located between the first and second working ends;
a second roller tip (20a) rotatably mounted on the second working end and rotatable about a center axis of the second working end and sized to distribute a restorative material on a tooth surface; and
a first bushing (30) rotatably mounted on the first working end (14) between the first working end and the first roller tip whereby the first roller tip is rotatable with the bushing about the center axis of the first working end; and
a second bushing (30) rotatably mounted on the second working end (16) between the second working end and the second roller tip whereby the second roller tip is rotatable with the bushing about the center axis of the second working end,
wherein the first and second roller tips are removable from the elongate body.

3. The dental instrument of claim 1 wherein the first roller tip is removable from the first working end.

4. The dental instrument of claim 2 or 3 further comprising at least one additional roller tip mountable on the first working end whereby the at least one additional roller tip is interchangeable with the first roller tip.

5. The dental instrument of claim 1 further comprising a bushing rotatably mounted on the first working end between the first working end and the first roller tip whereby the first roller tip is rotatable relative to the first working end by means of the rotatable bushing.

6. The dental instrument of claim 5 wherein the first working end includes a ridge portion (13) and the bushing includes a clip portion (32) adapted to engage the ridge portion.

7. The dental instrument of claim 1 further comprising a rolling element bearing mounted on the first working end between the first working end and the first roller tip whereby the first roller tip is rotatable relative to the first working end by means of the rolling element bearing (36).

8. The dental instrument of any one of claims 1 and 5 to 7 further comprising a second working end (16) for inserting into an oral cavity and a second roller tip rotatably mounted on the second working end and rotatable about the axis of the second working end to distribute a restorative material on a tooth surface.

9. The dental instrument of claim 8 further comprising a bushing (30) rotatably mounted on the second working end (16) between the second working end and the second roller tip whereby the second roller tip is rotatable relative to the second working end by means of the rotatable bushing.

10. The dental instrument of claim 9 wherein the second working end includes a ridge portion and the bushing includes a clip portion adapted to engage the ridge portion.

11. The dental instrument of claim 8 further comprising a rolling element bearing mounted on the second working end between the second working end and the second roller tip whereby the second roller tip is rotatable relative to the second working end by means of the rolling element bearing.

12. The dental instrument of claim 2 wherein the first and second working ends each include a ridge portion and each bushing includes a clip portion adapted to engage the respective ridge portion.

13. The dental instrument of claim 2 wherein the roller tips are removably mounted on the bushings whereby the roller tips are removable from the elongate body and the bushings.

14. The dental instrument of either claim 9 or claim 13 further comprising at least one additional roller tip removably mountable on the bushings whereby the at least one additional roller tip is interchangeable with the mounted roller tips.

15. The dental instrument of either claim 2 or claim 9 wherein the roller tips are substantially permanently mounted on the bushings and the bushings are removably mounted on the first and second working ends such that the roller tips are removable with the bushings from the elongate body.

16. The dental instrument of claim 15 further comprising at least one additional roller tip substantially permanently mounted on a respective additional bushing, wherein the respective additional bushing is removably mountable on the first and second working ends whereby the at least one additional roller tip and respective bushing are interchangeable with the mounted roller tips and bushings.

17. The dental instrument of any of claims 2 or 8 to 16 wherein the handle portion includes a center axis, and wherein the center axis of the first working end is coaxial with the center axis of the handle portion and the center axis of the second working end is angled 45-90° with respect to the center axis of the handle portion.

18. The dental instrument of any of claims 1 to 16 wherein the handle portion has a center axis and the center axis of the first working end is coaxial with the center axis of the handle portion.

19. The dental instrument of any of claims 1 to 16 wherein the handle portion has a center axis and the center axis of the first working end is angled 45-90° with respect to the center axis of the handle portion.

20. The dental instrument of any preceding claim wherein the elongate body comprises a plastic material containing 2-30 wt.% of a friction-reducing additive.

21. The dental instrument of any of claims 2, 5, 6, 8 to 10 or 12 to 16
wherein the bushing comprises a plastic material containing 2-30 wt.% of a friction-reducing additive.

22. The dental instrument of either claim 20 or claim 21 wherein the plastic material comprises 5-15 wt.% of a polytetrafluoroethylene friction-reducing additive.

23. The dental instrument of any one of claims 20 to 22 wherein the plastic material is selected from the group consisting of polyetherimide, polybutylene terephthalate, polyphenylsulfone, polyethersulfone, polyphthalamid and polyetheretherketone.

24. The dental instrument of any one of claims 20 to 23 wherein the plastic material is reinforced with at least one of glass fibers and carbon fibers.

25. The dental instrument of any of claims 1 to 20 wherein the elongate body comprises a plastic material containing friction-reducing additive in an amount sufficient to provide a kinetic coefficient of friction of less than 0.2 between the first working end and the first roller tip.

26. The dental instrument of any of claims 2, 5, 6, 8 to 10 or 12 to 16
wherein at least one of the elongate body and the bushing comprises a plastic material containing a friction-reducing additive in an amount sufficient to provide a kinetic coefficient of friction of less than 0.2 between the first and second working ends and the respective roller tips.

27. The dental instrument of any one of claims 20, 21, 25 or 26 wherein the friction-reducing additive is polytetrafluoroethylene.

28. The dental instrument of any preceding claim wherein the roller tip comprises at least one material selected from the group consisting of: a silicone, a thermoplastic elastomer, and polyurethane.

29. The dental instrument of any preceding claim wherein the roller tip has a Shore A hardness in the range of 20-60.

30. The dental instrument of any preceding claim wherein the roller tip has an outer surface that is substantially uniformly cylindrical.

31. The dental instrument of claims 1 to 29 wherein the roller tip has an outer surface with a maximum circumference adjacent the handle portion and an inward taper from the maximum circumference to a minimum circumference furthest from the handle portion.

## Patentansprüche

1. Dentalinstrument (10) zum Verteilen eines Restaurationsmaterials auf einer Zahnoberfläche, wobei das Instrument Folgendes umfasst:
einen länglichen Körper (12), umfassend einen Griffteil (18) und ein sich davon erstreckendes erstes Arbeitsende (14), und
eine erste Rollspitze (20), die zum Verteilen eines Restaurationsmaterials auf einer Zahnoberfläche bemessen ist,
**dadurch gekennzeichnet, dass** die genannte erste Rollspitze drehbar an dem ersten Arbeitsende (14) angebracht ist und um eine Mittelachse des ersten Arbeitsendes drehbar ist.

2. Dentalinstrument nach Anspruch 1, ferner umfassend:
ein zweites Arbeitsende (16), das sich von dem Griffteil (18) erstreckt, wobei sich der Griffteil zwischen dem ersten und dem zweiten Arbeitsende befindet;
eine zweite Rollspitze (20a), die drehbar an dem zweiten Arbeitsende angebracht ist und um eine Mittelachse des zweiten Arbeitsendes drehbar ist und zum Verteilen eines Restaurationsmaterials auf einer Zahnoberfläche bemessen ist; und
eine erste Buchse (30), die drehbar an dem ersten Arbeitsende (14) zwischen dem ersten Arbeitsende und der ersten Rollspitze montiert ist, wodurch die erste Rollspitze mit der Buchse um die Mittelachse des ersten Arbeitsendes drehbar ist; und
eine zweite Buchse (30), die zwischen dem zweiten Arbeitsende und der zweiten Rollspitze drehbar an dem zweiten Arbeitsende (16) montiert ist, wodurch die zweite Rollspitze mit der Buchse um die Mittelachse des zweiten Arbeitsendes drehbar ist,
wobei die erste und die zweite Rollspitze von dem länglichen Körper abnehmbar sind.

3. Dentalinstrument nach Anspruch 1, bei dem die erste Rollspitze von dem ersten Arbeitsende abnehmbar ist.

4. Dentalinstrument nach Anspruch 2 oder 3, ferner umfassend wenigstens eine zusätzliche, an dem ersten Arbeitsende montierbare Rollspitze, wobei die wenigstens eine zusätzliche Rollspitze mit der ersten Rollspitze austauschbar ist.

5. Dentalinstrument nach Anspruch 1, ferner umfassend eine Buchse, die zwischen dem ersten Arbeitsende und der ersten Rollspitze drehbar an dem ersten Arbeitsende angebracht ist, wodurch die erste Rollspitze durch die drehbare Buchse relativ zu dem ersten Arbeitsende drehbar ist.

6. Dentalinstrument nach Anspruch 5, bei dem das erste Arbeitsende einen Rippenteil (13) aufweist und die Buchse einen Rastteil (32) zum Einrasten an dem Rippenteil aufweist.

7. Dentalinstrument nach Anspruch 1, ferner umfassend ein Rollelementlager, das zwischen dem ersten Arbeitsende und der ersten Rollspitze an dem ersten Arbeitsende angebracht ist, wodurch die erste Rollspitze durch das Rollelementlager (36) relativ zu dem ersten Arbeitsende drehbar ist.

8. Dentalinstrument nach einem der Ansprüche 1 und 5 bis 7, ferner umfassend ein zweites Arbeitsende (16) zum Einführen in eine Mundhöhle und eine zweite Rollspitze, die drehbar an dem zweiten Arbeitsende angebracht ist und um die Achse des zweiten Arbeitsendes drehbar ist, um ein Restaurationsmaterial auf einer Zahnoberfläche zu verteilen.

9. Dentalinstrument nach Anspruch 8, ferner umfassend eine Buchse (30), die zwischen dem zweiten Arbeitsende und der zweiten Rollspitze drehbar an dem zweiten Arbeitsende (16) angebracht ist, wodurch die zweite Rollspitze durch die drehbare Buchse relativ zu dem zweiten Arbeitsende drehbar ist.

10. Dentalinstrument nach Anspruch 9, bei dem das zweite Arbeitsende einen Rippenteil aufweist und die Buchse einen Rastteil zum Einrasten an dem Rippenteil aufweist.

11. Dentalinstrument nach Anspruch 8, ferner umfassend ein Rollelementlager, das zwischen dem zweiten Arbeitsende und der zweiten Rollspitze an dem zweiten Arbeitsende angebracht ist, wodurch die zweite Rollspitze durch das Rollelementlager relativ zu dem zweiten Arbeitsende drehbar ist.

12. Dentalinstrument nach Anspruch 2, bei dem das erste und das zweite Arbeitsende jeweils einen Rippenteil aufweisen und jede Buchse einen Rastteil zum Einrasten an dem jeweiligen Rippenteil aufweist.

13. Dentalinstrument nach Anspruch 2, bei dem die Rollspitzen abnehmbar auf den Buchsen angebracht sind, wodurch die Rollspitzen von dem länglichen Körper und den Buchsen abnehmbar sind.

14. Dentalinstrument nach Anspruch 9 oder Anspruch 13, ferner umfassend wenigstens eine zusätzliche Rollspitze, die abnehmbar auf den Buchsen montierbar ist, wodurch die wenigstens eine zusätzliche Rollspitze mit den angebrachten Rollspitzen austauschbar ist.

15. Dentalinstrument nach Anspruch 2 oder Anspruch 9, bei dem die Rollspitzen im Wesentlichen bleibend an den Buchsen angebracht sind und die Buchsen abnehmbar an dem ersten und dem zweiten Arbeitsende angebracht sind, so dass die Rollspitzen mit den Buchsen von dem länglichen Körper abgenommen werden können.

16. Dentalinstrument nach Anspruch 15, ferner umfassend wenigstens eine zusätzliche Rollspitze, die im wesentlichen bleibend an einer jeweiligen zusätzlichen Buchse angebracht ist, wobei die jeweilige zusätzliche Buchse abnehmbar an dem ersten und dem zweiten Arbeitsende montierbar ist, wodurch die wenigstens eine zusätzliche Rollspitze und die jeweilige Buchse mit den angebrachten Rollspitzen und Buchsen austauschbar sind.

17. Dentalinstrument nach einem der Ansprüche 2 oder 8 bis 16, bei dem der Griffteils eine Mittelachse hat und bei dem die Mittelachse des ersten Arbeitendes mit der Mittelachse des Griffteils koaxial ist und die Mittelachse des zweiten Arbeitsendes im Winkel von 45° - 90° in Bezug auf die Mittelachse des Griffteils abgewinkelt ist.

18. Dentalinstrument nach einem der Ansprüche 1 bis 16, bei dem der Griffteil eine Mittelachse hat und die Mittelachse des ersten Arbeitsendes mit der Mittelachse des Griffteils koaxial ist.

19. Dentalinstrument nach einem der Ansprüche 1 bis 16, bei dem der Griffteil eine Mittelachse hat und die Mittelachse des ersten Arbeitsendes im Winkel von 45° - 90° in Bezug auf die Mittelachse des Griffteils abgewinkelt ist.

20. Dentalinstrument nach einem der vorhergehenden Ansprüche, bei dem der längliche Körper einen Kunststoff umfasst, der 2 - 30 Gew.-% eines reibungsmindernden Zusatzstoffs enthält.

21. Dentalinstrument nach einem der Ansprüche 2, 5, 6, 8 bis 10 oder 12 bis 16, bei dem die Buchse einen Kunststoff umfasst, der 2 - 30 Gew.-% eines reibungsmindernden Zusatzstoffs enthält.

22. Dentalinstrument nach Anspruch 20 oder Anspruch 21, bei dem der Kunststoff 5 - 15 Gew.-% eines reibungsmindernden Polytetrafluorethylen-zusatzstoffs umfasst.

23. Dentalinstrument nach einem der Ansprüche 20 bis 22, bei dem der Kunststoff aus der Gruppe bestehend aus Polyetherimid, Polybutylenterephthalat, Polyphenylsulfon, Polyethersulfon, Polyphthalamid und Polyetheretherketon ausgewählt ist.

24. Dentalinstrument nach einem der Ansprüche 20 bis 23, bei dem der Kunststoff mit Glasfasern und/oder Kohlenstofffasern verstärkt ist.

25. Dentalinstrument nach einem der Ansprüche 1 bis 20, bei dem der längliche Körper einen Kunststoff umfasst, der reibungsmindernden Zusatzstoff in einer Menge enthält, die zum Bereitstellen eines kinetischen Reibungskoeffizienten von weniger als 0,2 zwischen dem ersten Arbeitsende und der ersten Rollspitze ausreicht.

26. Dentalinstrument nach einem der Ansprüche 2, 5, 6, 8 bis 10 oder 12 bis 16, bei dem der längliche Körper und/oder die Buchse einen Kunststoff umfasst, der einen reibungsmindernden Zusatzstoff in einer Menge enthält, die zum Bereitstellen eines kinetischen Reibungskoeffizienten von weniger als 0,2 zwischen dem ersten und dem zweiten Arbeitsende und der jeweiligen Rollspitze ausreicht.

27. Dentalinstrument nach einem der Ansprüche 20, 21, 25 oder 26, bei dem der reibungsmindernde Zusatzstoff polytetrafluorethylen ist.

28. Dentalinstrument nach einem der vorhergehenden Ansprüche, bei dem die Rollspitze wenigstens ein aus der Gruppe bestehend aus einem silikon, ein thermoplastisches Elastomer und Polyurethan ausgewähltes Material umfasst.

29. Dentalinstrument nach einem der vorhergehenden Ansprüche, bei dem die Rollspitze eine Shore-A-Härte im Bereich von 20 bis 60 hat.

30. Dentalinstrument nach einem der vorhergehenden Ansprüche, bei dem die Rollspitze eine Außenfläche hat, die im wesentlichen einheitlich zylindrisch ist.

31. Dentalinstrument nach einem der Ansprüche 1 bis 29, bei dem die Rollspitze eine Außenfläche mit einem maximalen Umfang neben dem Griffteil und einer Verjüngung von dem maximalen Umfang zu einem am weitesten von dem Griffteil entfernten Mindestumfang hat.

## Revendications

1. Instrument dentaire (10) pour répartir un matériau de restauration sur la surface d'une dent, l'instrument comprenant:
un corps allongé (12) comprenant une partie de poignée (18) et une première extrémité de travail (14) s'étendant de là; et
une première pointe à rouleau (20) montée d'une manière rotative sur la première extrémité de travail (14) et pouvant tourner autour d'un axe central de la première extrémité de travail, **caractérisé en ce que** ladite première pointe à rouleau est dimensionnée pour répartir un matériau de restauration sur la surface d'une dent.

2. L'instrument dentaire de la revendication 1, comprenant en outre:
une deuxième extrémité de travail (16) s'étendant de la partie de poignée (18), dans lequel la partie de poignée est située entre les première et deuxième extrémités de travail;
une deuxième pointe à rouleau (20a) montée d'une manière rotative sur la deuxième extrémité de travail et pouvant tourner autour d'un axe central de la deuxième extrémité de travail et dimensionnée pour répartir un matériau de restauration sur la surface d'une dent; et
une première douille (30) montée d'une manière rotative sur la première extrémité de travail (14) entre la première extrémité de travail et la première pointe à rouleau, en vertu de quoi la première pointe à rouleau peut tourner avec la douille autour de l'axe central de la première extrémité de travail; et
une deuxième douille (30) montée d'une manière rotative sur la deuxième extrémité de travail (16) entre la deuxième extrémité de travail et la deuxième pointe à rouleau, en vertu de quoi la deuxième pointe à rouleau peut tourner avec la douille autour de l'axe central de la deuxième extrémité de travail,
dans lequel les première et deuxième pointes à rouleau sont détachables du corps allongé.

3. L'instrument dentaire de la revendication 1, dans lequel la première pointe à rouleau est détachable de la première extrémité de travail.

4. L'instrument dentaire de la revendication 2 ou 3, comprenant au moins une pointe à rouleau supplémentaire pouvant être montée sur la première extrémité de travail, en vertu de quoi la au moins une pointe à rouleau supplémentaire est interchangeable avec la première pointe à rouleau.

5. L'instrument dentaire de la revendication 1, comprenant en outre une douille montée d'une manière rotative sur la première extrémité de travail entre la première extrémité de travail et la première pointe à rouleau, en vertu de quoi la première pointe à rouleau peut tourner par rapport à la première extrémité de travail au moyen de la douille rotative.

6. L'instrument dentaire de la revendication 5, dans lequel la première extrémité de travail comprend une partie de nervure (13) et la douille comprend une partie de collier adaptée pour s'engager avec la partie de nervure.

7. L'instrument dentaire de la revendication 1, comprenant en outre un support d'éléments roulants monté sur la première extrémité de travail entre la première extrémité de travail et la première pointe à rouleau, en vertu de quoi la première pointe à rouleau peut tourner par rapport à la première extrémité de travail au moyen du support d'éléments roulants (36).

8. L'instrument dentaire de l'une quelconque des revendications 1 et 5 à 7, comprenant en outre une deuxième extrémité de travail (16) à introduire dans une cavité buccale et une deuxième pointe à rouleau montée sur la deuxième extrémité de travail et pouvant tourner autour de l'axe de la deuxième extrémité de travail pour répartir un matériau de restauration sur la surface d'une dent.

9. L'instrument dentaire de la revendication 8, comprenant en outre une douille (30) montée d'une manière rotative sur la deuxième extrémité de travail (16) entre la deuxième extrémité de travail et la deuxième pointe à rouleau, en vertu de quoi la deuxième pointe à rouleau peut tourner par rapport à la deuxième extrémité de travail au moyen de la douille rotative.

10. L'instrument dentaire de la revendication 9, dans lequel la deuxième extrémité de travail comprend une partie de nervure et la douille comprend une partie de collier adaptée pour s'engager avec la partie de nervure.

11. L'instrument dentaire de la revendication 8, comprenant en outre un support d'éléments roulants monté sur la deuxième extrémité de travail entre la deuxième extrémité de travail et la deuxième pointe à rouleau, en vertu de quoi la deuxième pointe à rouleau peut tourner par rapport à la deuxième extrémité de travail au moyen du support d'éléments roulants.

12. L'instrument dentaire de la revendication 2, dans lequel les première et deuxième extrémités de travail comprennent une partie de nervure et chaque douille comprend une partie de collier adaptée pour s'engager avec la partie de nervure respective.

13. L'instrument dentaire de la revendication 2, dans lequel les pointes à rouleau sont montées d'une manière détachable sur les douilles, en vertu de quoi les pointes à rouleau sont détachables du corps allongé et des douilles.

14. L'instrument dentaire de la revendication 9 ou de la revendication 13, comprenant en outre au moins une pointe à rouleau supplémentaire pouvant être montée d'une manière détachable sur les douilles, en vertu de quoi la au moins une pointe à rouleau supplémentaire est interchangeable avec les pointes à rouleau montées.

15. L'instrument dentaire de la revendication 2 ou de la revendication 9, dans lequel les pointes à rouleau sont montées d'une manière sensiblement permanente sur les douilles et les douilles sont montées d'une manière détachable sur les première et deuxième extrémités de travail de telle sorte que les pointes à rouleau sont détachables avec les douilles du corps allongé.

16. L'instrument dentaire de la revendication 15, comprenant en outre au moins une pointe à rouleau supplémentaire montée d'une manière sensiblement permanente sur une douille supplémentaire respective, dans lequel la douille supplémentaire respective est montée d'une manière détachable sur les première et deuxième extrémités de travail, en vertu de quoi la au moins une pointe à rouleau supplémentaire et douille respective sont interchangeables avec les pointes à rouleau et douilles montées.

17. L'instrument dentaire de l'une quelconque des revendications 2 ou 8 à 16, dans lequel la partie de poignée comprend un axe central et dans lequel l'axe central de la première extrémité de travail est coaxial à l'axe central de la partie de poignée et l'axe central de la deuxième extrémité de travail est à un angle de 45-90° par rapport à l'axe central de la partie de poignée.

18. L'instrument dentaire de l'une quelconque des revendications 1 à 16, dans lequel la partie de poignée a un axe central et l'axe central de la première extrémité de travail est coaxial à l'axe central de la partie de poignée.

19. L'instrument dentaire de l'une quelconque des revendications 1 à 16, dans lequel la partie de poignée a un axe central et l'axe central de la première extrémité de travail est à un angle de 45-90° par rapport à l'axe central de la partie de poignée.

20. L'instrument dentaire de l'une quelconque des revendications précédentes, dans lequel le corps allongé comprend une matière plastique contenant 2-30% en poids d'un additif réducteur de friction.

21. L'instrument dentaire de l'une quelconque des revendications 2, 5, 6, 8 à 10 ou 12 à à 16, dans lequel la douille comprend une matière plastique contenant 2-30% en poids d'un additif réducteur de friction.

22. L'instrument dentaire de la revendication 20 ou de la revendication 21, dans lequel la matière plastique comprend 5-15% en poids d'un additif réducteur de friction en polytétrafluoroéthylène.

23. L'instrument dentaire de l'une quelconque des revendications 20 à 22, dans lequel la matière plastique est sélectionnée parmi le groupe consistant en polyétherimide, polybutylène téréphtalate, polyphénylsulfone, polyéthersulfone, polyphtalamide et polyétheréthercétone.

24. L'instrument dentaire de l'une quelconque des revendications 20 à 23, dans lequel la matière plastique est renforcée avec au moins les unes d'entre fibres de verre et fibres de carbone.

25. L'instrument dentaire de l'une quelconque des revendications 1 à 20, dans lequel le corps allongé comprend une matière plastique contenant un additif réducteur de friction en une quantité suffisante pour donner un coefficient de friction cinétique de moins de 0,2 entre la première extrémité de travail et la première pointe à rouleau.

26. L'instrument dentaire de l'une quelconque des revendications 2, 5, 6, 8 à 10 ou 12 à 16, dans lequel au moins l'un d'entre le corps allongé et la douille comprend une matière plastique contenant un additif réducteur de friction en une quantité suffisante pour donner un coefficient de friction cinétique de moins de 0,2 entre les première et deuxième extrémités de travail et les pointes à rouleau respectives.

27. L'instrument dentaire de l'une quelconque des revendications 20, 21, 25 ou 26,
dans lequel l'additif réducteur de friction est du polytétrafluoroéthylène.

28. L'instrument dentaire de l'une quelconque des revendications précédentes, dans lequel la pointe à rouleau comprend au moins une matière sélectionnée parmi le groupe consistant en: une silicone, un élastomère thermoplastique et du polyuréthane,

29. L'instrument dentaire de l'une quelconque des revendications précédentes, dans lequel la pointe à rouleau a une dureté Shore A dans la plage de 20-60.

30. L'instrument dentaire de l'une quelconque des revendications précédentes, dans lequel la pointe à rouleau a une surface extérieure qui est sensiblement cylindrique d'une manière uniforme.

31. L'instrument dentaire des revendications 1 à 29, dans lequel la pointe à rouleau a une surface extérieure d'une circonférence maximale adjacente à la partie de poignée et une conicité vers l'intérieur de la circonférence maximale jusqu'à une circonférence minimale le plus loin de la partie de poignée.
